# EUROPEAN PATENT APPLICATION

(11) **EP 0 889 474 A1**
(43) Date of publication of application: **07.01.1999**
(21) Application number: 97401571.1
(22) Date of filing: 03.07.1997
(51) Int. Cl.: G11B 20/18

(54) **Error tolerant data recording**

(71) Applicant: Deutsche Thomson Brandt, 30433 Hannover (DE)
(72) Inventor: Wessoly, Bernd, 92648 Boulogne Cedex (FR); Peters, Helmut, 92648 Boulogne Cedex (FR); Timmermann, Friedrich, 92648 Boulogne Cedex (FR)
(74) Representative: Zhang, Jianguo

(57) **Abstract**

A method for recording data which allows for a tolerance of errors during recording of data in a storage medium is described. The data is organized in one or a plurality of blocks. During read after write a number or errors in the data readout signal is counted. Re-recording of data is undertaken if the number of errors is greater than a predetermined number.

## Description

The present invention relates to a method for recording data which allows for a tolerance of errors which occur during recording of data on a storage medium. The present invention further relates to a device for recording and reading data which can be used to implement the method for recording.

In data recording and reading devices a plurality of strategies may be used to deal with errors occurring in a data readout signal. A data readout signal is obtained from reading data stored on a data storage medium.

A first strategy is to minimize an overall number of errors due for example to faulty recording of the data or to local defects on the data storage medium. This is done by reading the data from the data storage medium immediately after it has been recorded and by detecting errors in the data readout signal. Errors in the data readout signal may be determined by comparing the data readout signal with the data which was recorded. The recording is halted as a result of the errors in the data readout signal and a re-recording of data is undertaken. A general example of the method used in the first strategy is described in The Art of Digital Audio, John Watkinson, Focal Press, Second Edition 1994, on p290 in the second paragraph. On detection of an error the recording is aborted, and the data is re-recorded on a part of the data storage medium different than a part on which the data was recorded at the previous time. The re-recording is time consuming because the recording is interrupted in the first place. Furthermore it is storage space consuming because an extra storage space is needed for re-recording.

A second strategy is to record an error code together with the data. This aims at detecting and recovering from errors in the data readout signal. As opposed to the first strategy, the readout is done independently from the recording, usually a relatively long time after the recording, and a new recording to replace erroneous read data may not be possible. The errors may for example be caused by alterations affecting the data storage medium.

Many different kinds of error codes are known and may be used. Some of these error codes allow to recover from more than one error in the data which they accompany.

The use of the second strategy does not eliminate the need for the first strategy. It is of great importance to achieve a recording of the data with a minimum of errors at the moment where the data is still available for re-recording and to have an errorless recorded error code with it in order to be able to use the second strategy at a later time. In this sense, the second strategy is typically used as a complementary strategy to the first strategy.

It is an aim of the present invention to implement a method to deal with errors occurring in the data readout signal in which during recording less time and less storage space are used up for re-recording than in prior art.

According to the present invention, a solution to the mentioned problem is found in a method for data recording on a data storage medium comprising the steps of recording data in a block on the data storage medium, reading the data from the data storage medium after the recording, checking a data readout signal for erroneous read data, setting an error condition as a function of the erroneous read data, for a determined error condition re-recording at least a portion of data corresponding to the erroneous read data. A number of the erroneous read data in the block is counted and the determined error condition is set if the number of erroneous read data is greater than a predetermined number.

The method according to the invention introduces an error tolerance because inside a block a number of errors inferior to the predetermined number may be accepted while recording. This considerably reduces the need for re-recording and as a consequence an overall recording time and an overall storage space required are reduced.

A prefered embodiment of the method according to the invention comprises the step of recording in the block an error code allowing to determine and correct in the data a total number of errors greater than the predetermined number.

In a further prefered embodiment of the method according to the invention, the error code is generated as Reed-Solomon codewords.

Reed-Solomon codewords have the advantage that the total number of errors may be customized to requirement of the data recording.

According to the present invention, a solution to the mentioned problem is also found in a device for recording and reading data on a data storage medium comprising data organizing means to record data on the data storage medium in one or a plurality of blocks. The device further comprises reading means to read data immediately after recording the data, analyzing means to check a data readout signal for erroneous read data, error condition setting means using at least indirectly an output from the analyzing means and re-recording means to repeat a recording of at least a portion of data corresponding to the erroneous read data, which are at least connected to the error condition setting means. The analyzing means comprise counting means to count a number of erroneous data inside a block and the counting means are connected to the error condition setting means.

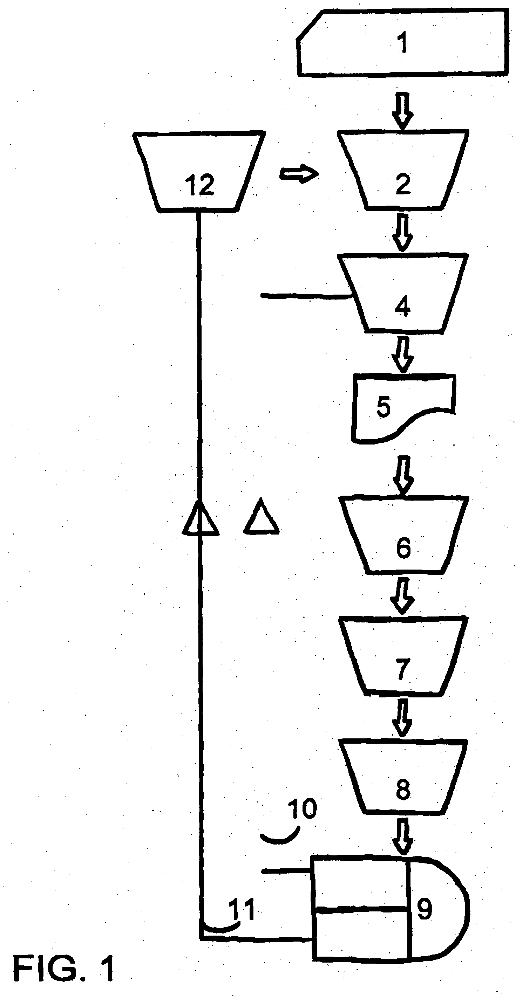

The invention will be explicited below using examples and figure 1 which contains a representation of a flow chart.

It is obvious that the examples given are not limitative of the present invention and that a man skilled in the art may use other embodiments to realize the invention.

The flow chart in figure 1 shows a box 1 representing data to record. The data to record from box 1 is organized into blocks before recording, each block being numbered with an index. A part of the data to record from box 1 is encoded in a block N(I) in box 2, I being an index. The block N(I) is recorded (box 4) on a data storage medium (box 5). At least a part of block N(I) is immediately read after recording (box 6). The data readout signal from block N(I) is analyzed in box 7 and a number of errors contained in the data readout signal is determined in box 8. The analysis in box 7 may be for example be done by comparing the data readout signal with corresponding data in box 1. An error condition is set in box 9 depending on the number of errors in the data readout signal being greater or not to a predetermined number. In the affirmative case, branch 10 which connects box 9 to box 4 leads to a re-recording of at least a portion of the block N(I). This means that the recording of box 4 is in fact also used to perform the re-recording. In the opposite case, branch 11 causes the index of block N(I) to be increased by one in box 12 and a new block N(I+1) to be encoded in 2. A new cycle for recording the new block N(I+1) starts.

An external conditional loop (not shown) allows to determine if all the data to record from box 1 has been recorded and eventually to stop the recording.

Box 2 may include a generating of Reed Solomon codewords which are in this case also recorded in block N(I).

The data storage medium in box 5 may for example be a magnetic tape. The recording on magnetic tape is done sequentially which means that at least some of the blocks will be recorded successively in longitudinal direction on the tape.

A device for recording and reading data on a magnetic tape according to the flow chart of figure 1 may for example comprise a multitrack magnetic writing head having on a flat surface a matrix of active recording parts. A reading head of the device is adjacent to the writing head and comprises a magneto-optical transducer. Such a device is better known as a stationary digital cassette recorder because it uses stationary recording a reading heads.

The data to record (box 1) may be for example be digitally coded audio, video or computer data.

## Claims

1. A method for data recording on a data storage medium comprising the steps of :
recording data in a block on the data storage medium,
reading the data from the data storage medium after the recording,
checking a data readout signal for erroneous read data,
setting an error condition as a function of the erroneous read data,
for a determined error condition re-recording at least a portion of data corresponding to the erroneous read data,
said method for data recording being characterized in that it further comprises the steps of
counting a number of erroneous read data in the block,
setting the determined error condition if the number of erroneous read data is
greater than a predetermined number.

2. A method for data recording according to claim 1 characterized in that it comprises the step of recording in said block an error code allowing to determine and correct in said data a total number of errors greater than said predetermined number.

3. A method for data recording according to claim 1 characterized in that said error code is generated as Reed-Solomon codewords.

4. Device for recording and reading data on a data storage medium comprising
data organizing means to record data on the data storage medium in one or a plurality of blocks,
reading means to read data immediately after recording of the data,
analyzing means to check a data readout signal for erroneous read data,
error condition setting means using at least indirectly an output from the analyzing means,
re-recording means to repeat a recording of at least a portion of data corresponding to the erroneous read data, said re-recording means being at least connected to the error condition setting means,
said device being characterized in that the analyzing means comprise a counting means to count a number of erroneous read data inside a block, said counting means being connected to said error condition setting means.

5. A device according to claim 4 characterized in that it comprises error code generating means to generate an error code for data organized in each of said blocks.

6. A device according to claim 5 characterized in that the error code generating means generate Reed-Solomon codewords.

7. A device according to anyone of claims 4 to 6 characterized in that it comprises a multitrack magnetic writing head for recording and a magneto-optical transducer for reading.
